# EUROPÄISCHE PATENTSCHRIFT

(11) **EP 2 135 892 B1**
(45) Veröffentlichungstag und Bekanntmachung des Hinweises auf die Patenterteilung: **07.08.2013**
(21) Anmeldenummer: 09007907.0
(22) Anmeldetag: 17.06.2009
(51) Int. Cl.: C08J 5/04, C08J 5/24, B27N 3/04

(54) **Verbundkörper**
composite body
Corps composite

(30) Priorität: 19.06.2008 AT 9882008
(43) Veröffentlichungstag der Anmeldung: 23.12.2009
(73) Patentinhaber: Lackinger, Gerald, 5020 Salzburg (AT)
(72) Erfinder: Lackinger, Gerald, 5020 Salzburg (AT)
(74) Vertreter: Hofinger, Stephan

(56) Entgegenhaltungen:
- WO-A2-2005/009701
- WO-A2-2008/057390
- DE-A1-102005 029 685
- DE-C- 652 068
- GB-A- 522 880
- US-A1- 2007 259 167

## Beschreibung

Die Erfindung betrifft ein Verfahren zur Herstellung eines Verbundkörpers, vorzugsweise einer Verbundplatte aus Holz und Leder. Weiters betrifft die Erfindung einen Verbundkörper bestehend aus einem Füllkörperanteil, Bindemittel und gegebenenfalls Zusatzstoffen.

Aus der DE 652 068 ist es bekannt, aus Lederfaserteilen und Sägespänen eine filzartige Platte zu schaffen. Die Platte wird durch die Verfilzung der Lederfaserteile und der Sägespäne sowie der darin enthaltenen Stoffe zusammengehalten. Eine solche Platte hat jedoch nur beschränkte mechanische und physikalische Eigenschaften. Zum Einem weist die Platte eine geringe mechanische Belastbarkeit auf und eignet sich somit nur bedingt als belastbares Bauelement. Zum Anderen bewirkt die Verfilzung von Lederfasern und Sägenspänen, dass die Platte sehr inhomogene Eigenschaften in Längserstreckung aufweist.

Aufgabe der vorliegenden Erfindung ist es daher, ein Verfahren sowie einen Verbundkörper, der jeweils eingangs genannten Gattung bereitzustellen, bei denen diese Eigenschaften verbessert sind.

Diese Aufgabe wird gelöst durch ein Verfahren zur Herstellung eines Verbundkörpers, vorzugsweise einer Verbundplatte, aus Holz, Leder und Bindemittel, umfassend die Schritte:
- Zerfasern des Holzes in Holzfasern,
- Zerfasern des Leders in Lederfasern,
- Vermischen der Leder- und Holzfasern,
- Zugeben des Bindemittels,
- gleichmäßiges Vermischen des Bindemittels mit den Leder- und Holzfasern und Verpressen des Holz-Leder-Bindemittel-Gemischs zum Verbundkörper.

Die Aufgabe wird ebenfalls gelöst durch Verbundkörper bestehend aus einem Füllkörperanteil, Bindemittel und gegebenenfalls Zusatzstoffen, wobei der FOllkörperanteil aus einem Gemisch von Holzfasern und Lederfasern besteht und wobei der Füllkörperanteil mit dem Bindemittel vermengt und mit diesem verpresst ist.

Die Zusatzstoffe können beispielsweise entweder den Holz- oder Lederfasern, oder dem Füllkörperanteil oder dem Bindemittel beigemengt werden.

Durch das Zerfasern des Holzes in Holzfasern und durch das Zerfasern des Leders in Lederfasern beim erfindungsgemäßen Verfahren, lassen sich diese Bestandteile zu einem Füllkörperanteil vermengen, der nicht im Gegensatz zu Sägespänen mit Lederfaserteilen verfilzt. Der verfitzende Effekt tritt noch weniger ein, wenn weiters vorgesehen ist, dass die Holzfasern vor dem Vermischen defibriert werden. Im idealfall ist weiters vorgesehen, dass auch die Lederfasern vor dem Vermischen defibriert werden. Durch Defibrierung (die manchmal auch als Fluffen bezeichnet wird) werden allfällige Knötchen und Pillen entfernt und es bleiben die reinen Fasern zurück. Ergänzend wird auf die US 3,987,968 verwiesen, in der eine Variante des Defibrierens beschrieben wird.

Durch das Vermischen der Leder- und Holzfasern und dem anschließenden Zugeben eines Bindemittels entsteht ein sehr homogenes Gemisch, das sich nach abschließendem Verpressen zu einem Verbundkörper verbinden lässt. Der abschließende Schritt des Verpressens kann beispielsweise in einer Pressform erfolgen, in die das Gemisch eingebracht wird. Abschließend wird der Pressform der Verbundkörper (beispielsweise als Verbundplatte) entnommen. Eine alternative Variante sieht ein Verpressen im sogenannten Durchlaufverfahren vor. Dabei wird das Gemisch aus Holzfasern, Lederfasern und Bindemittel zwischen Walzen verpresst. Auf diese Art und Weise können besonders einfach Verbundplatten hergestellt werden.

Im Prinzip ist der Gehalt an Holzfasern und Lederfasern relativ frei wählbar. Beispielsweise könnte vorgesehen sein, dass der Holzanteil zwischen 10 und 90 % und der Lederanteil zwischen 90 und 10 % betragen. Um eine Platte mit besonders guten mechanischen Eigenschaften bereitzustellen hat es sich allerdings als günstig erwiesen, wenn der Lederanteil zumindest 50 % bezogen auf den Holzanteil (jeweils in Gewichtsprozent) beträgt.

Als Bindemittel sind unterschiedliche Komponenten möglich. Beispielsweise könnte es ein Mehrkomponentenbindemittel eingesetzt werden. Ein besonders bevorzugtes Ausführungsbeispiel sieht vor, dass das Bindemittel zwei Komponenten aufweist, wobei eine Komponente ein Aldehyd und die zweite Komponente ein Phenol ein Melamin, ein Resorcinol oder Harnstoff ist. Die Komponenten Phenol, Melamin, Resorcinol oder Harnstoff können auch in unterschiedlichen Mischungsverhältnissen verwendet werden. Alternativ dazu kann zumindest ein Bindemittel ausgewählt aus der Gruppe Harnstoff-Formaldehyd-Leimharze (UF-Harze), Melamin-Harnstoff-Formaldehyd-Leime (MUF-Leime), Phenol-Formaldehyd-Leime (PF-Leime), Resorcin- und Phenol-Resorcin-Formaldehyd-Harze (PRF-Harze), polymere Diphenylmethan-Diisocinate (PMDI), Tannine, Lignine, Polyamine, Polyethylenimine (PEI) oder Mischungen daraus vorgesehen sein. Die Mischungsverhältnisse im Falle einer Mischung sind vom Fachmann frei wählbar.

Für den Schritt des Verpressens des Gemischs ist günstiger Weise vorgesehen, wenn das Verpressen des Holz-Leder-Bindemittel-Gemischs bei einer Temperatur zwischen 70° und 200°C, vorzugweise zwischen 100° und 175°C durchgeführt wird. Im speziellen ist es noch günstiger, wenn dieser Bereich zwischen 120° und 170°C liegt, wobei bei Versuchen der Anmelderin der Temperaturbereich zwischen 140° und 180°, vorzugsweise bei etwa 150°C, als besonders geeignet zum Durchrühren des Pressens ermittelt wurde.

Die mechanischen Eigenschaften, insbesondere der Elastizitätsmodul eines erfindungsgemäß hergestellten Verbundkörpers, ist dann besonders günstig, wenn der Feuchtegehalt des Holzes und Leders vor dem Zerfasem auf unter 35 %, vorzugsweise unter 15 %, besonders bevorzugt auf unter 12 % gebracht wird. Durch diesen sogenannten Konditionierungsschritt werden das Leder und das Holz auf ein vernünftiges Maß an Restfeuchte reduziert.

Die erfindungsgemäß vorgesehenen Merkmale des Verfahrens sind selbstverständlich auch auf den erfindungsgemäß vorgesehenen Verbundkörper, vorzugsweise Verbundplatte, anwendbar und vorgesehen.

In einer günstigen Ausführungsvariante ist vorgesehen, wenn das Verhältnis von Holzfasern zu Lederfasern etwa 1:2 beträgt. Das eingesetzte Leder kann in herkömmlicher Weise gegerbt sein. Da bei der Lederverarbeitung häufig Abfälle entstehen, können solche Lederabfälle für das erfindungsgemäße Verfahren und den erfindungsgemäßen Verbundkörper verwendet werden. Abhängig vom Gerbeverfahren ist das erhaltene Leder entweder chromfrei (Gerbemittel ohne Chrom) oder chromhältig (Gerbemittel enthält Chrom). Bei chromfreiem Leder spricht man von sogenannten wet-white während man bei chromhältigem Leder von wet-blue spricht. Die Zumengung von Lederfasem zum Verbundkörper verbessert die physikalischen Eigenschaften, wie Bruchdehnung, Zugverhalten, Biegesteifigkeit und auch wesentlich das Brandverhalten im Vergleich zu herkömmlichen Spanplatten bzw. Faserplatten, ohne dass sich die anderen Eigenschaften, wie Gewicht, Dichte etc. verändern. Insbesondere als günstig hat es sich jedoch erwiesen, wenn sogenanntes chromfreies Leder (wet-white) zugesetzt wird, da der so erhaltene Verbundkörper am Ende des Produktlebenszyklusses gegenüber Spanplatten nicht beeinträchtig ist. Der Verbundkörper kann sowohl thermisch weiterverarbeitet, recycelt oder deponiert werden. Bei Zusatz von chromhältigem Leder ist die Wiederverwertbarkeit am Ende des Lebenszyklusses eingeschränkter aufgrund der Chrombelastung.

Als eingesetztes Holz sind die in herkömmlichen Span- bzw. Faserplatten bekannten Materialien, Hölzer und Holzkombinationen einsetzbar. Insbesondere können Sägespäne, Hobelspäne, Schwarten, Spreißel, Kappstücke und Hackschnitzel aus Zerspanerlinien verwendet werden. Die bevorzugte Rohdichte der Hölzer (Nadel- oder Laubhölzer) sollte zwischen 0,35 und 0,70 g/cm³ liegen. Nicht geeignet bzw. unvorteilhaft für die Herstellung der Verbundplatten sind Cellulosefasern, die nicht auf einfache Art und Weise bei der Holzverarbeitung aus Holz- bzw. Holzabfällen gewonnen werden können und daher wesentlich aufwändiger in der Anschaffung und Herstellung sind. Auch Baumwollfasern sind für die Holz-Leder-Verbundplatte in dieser Hinsicht ungeeignet. Hinsichtlich des Leders kommen bevorzugt die bei der Lederherstellung bekannten Abfallstoffe bzw. Materialien und Halbfertigprodukte und Fertigprodukte wie Blösse, wet-white bzw. wet-blue und alle diesem Zwischenstadium ähnlichen Hauptbestandteile, Crust (natur oder gefärbt) und Zwischenprodukte, Fertigleder, vorzugsweise mit einer Teilchengröße von unter 5 cm Durchmesser in Frage. Grundsätzlich sind alle Tierhäute bzw. Häute aller Tierarten als Ausgangsmaterialien vorstellbar. Das Leder kann in jedem Zustand verarbeitet werden, d.h. von der Haut bis zum fertig gegerbten und/oder zugerichteten Leder. Bevorzugt ist vorgesehen, nur eine Ledersorte zu verwenden. Dabei kann vorgesehen sein, Leder von Rindern einer oder mehrerer Rinderrassen zu verwenden. Es kann auch vorgesehen sein, dass die Lederfasem aus einer Mischung von Chrom- und chromfrei gegerbten Leder stammen.

Die Lederfasern werden günstigerweise zerkleinert, sodass sie sich mit dem Bindemittel gut vermengen lassen. Die endgültige Teilchengröße ist von untergeordneter Bedeutung, es ist jedoch von Vorteil, wenn die Teilchen unterschiedlich groß sind, um sich zum Einen gut mit den Holzfasern zu vermengen und zum Anderen zeigten sich gute physikalische Eigenschaften. Die Verarbeitbarkeit von Falzabfällen war ebenfalls gegeben.

Ein erfindungsgemäß hergestellter Verbundkörper zeigte verbesserte Eigenschaften hinsichtlich der Bruchdehnungen, Biegesteifigkeit etc., wobei die Werte bis zum Doppelten des ausgehenden Wertes bei gleichbleibender Dichte und Gewicht verbessert waren. Auch das Brandverhalten war deutlich verbessert - ein solcher Verbundkörper zeigt beispielsweise Selbstverlöschungseigenschaften. Überraschenderweise konnte festgestellt werden, dass beim Zusatz von sogenannten Wet-white-Leder der Verbundkörper bei Belastung später zerbricht, als bei der Zumengung von Wet-blue-Leder. Dies ist insofern überraschend, da wet-white bei der Trockung eher hart und spröde wirkt, während wet-blue nach der Trocknung in der Regel weicher bleibt. Experimentelle Untersuchungen haben außerdem gezeigt, dass im Vergleich zu Verbundkörpern ohne Lederfasern die Oberflächenhärte des Verbundkörpers erhöht ist.

Hinsichtlich der Bindemittel konnte gezeigt werden, dass ein Harnstoff Fonnaldehydharz die Eigenschaften bezüglich der Querzugfestigkeit erhöht gegenüber anderen Bindemitteln.

Eine weitere positive Eigenschaft, die experimentell gezeigt werden konnte, war die Erkenntnis, dass mit Erhöhung des Lederanteils die Feuchtigkeitsaufnahmefähigkeit des Verbundkörpers steigt. Weiters konnte gezeigt werden, dass bei der Verwendung von wet-white gegenüber wet-blue die Fähigkeit Wasser aufzunehmen, weiter erhöht ist. Bezüglich der Oberflächenhärte konnte ebenfalls festgestellt werden, dass die Zumengung von wet-blue eine höhere Oberflächenhärte hervorruft, als wet-white.

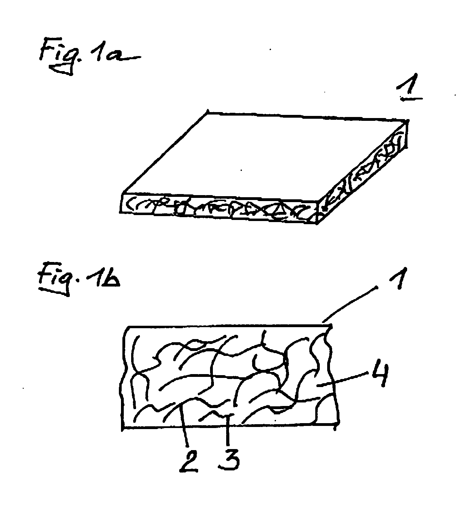

Abschließend ist noch schematisch in der Figur ein erfindungsgemäßer Verbundkörper im Querschnitt gezeigt. Die Fig. 1 a zeigt dabei einen erfindungsgemäßen Verbundkörper 1 in Form einer Verbundplatte. Der Querschnitte gemäß Fig. 1b zeigt dabei den eigentlichen Verbundkörper 1 mit einem Bindemittel 4 und einem Füllkörperanteil, der aus einem Gemisch von Holzfasern 2 und Lederfasern 3 besteht, wobei die Holzfasern 2 und die Lederfasern 3 vermengt und verpresst sind.

## Patentansprüche

1. Verfahren zur Herstellung eines Verbundkörpers, vorzugsweise einer Verbundplatte, aus Holz, Leder und Bindemittel, umfassend die Schritte:
- Zerfasern des Holzes in Holzfasern,
- Zerfasern des Leders in Lederfasern,
- Vermischen der Leder und Holzfasern,
- Zugeben des Bindemittels.
- gleichmäßiges Vermischen des Bindemittels mit den Leder und Holzfasem
- und Verpressen des Holz Leder-Bindemittel-Gemischs zum Verbundkörper.

2. Verfahren nach Anspruch 1, **dadurch gekennzeichnet, dass** der Holzanteil zwischen 10 und 90 % und der Lederanteil zwischen 90 und 10 % betragen.

3. Verfahren nach Anspruch 1 oder 2, **dadurch gekennzeichnet, dass** das Bindemittel zwei Komponenten aufweist, wobei eine Komponente ein Aldehyd und die zweite Komponente ein Phenol, ein Melamin, ein Resorcinol oder Harnstoff ist.

4. Verfahren nach einem der Ansprüche 1 bis 3, **gekennzeichnet durch** zumindest ein Bindemittel ausgewählt aus der Gruppe Harnstoff-Formaldehyd-Leimharze (UF-Harze), Melamin-Harnstoff-Formaldehyd-Leime (MUF-Leime), Phenol-Formaldehyd-Leime (PF-Leime), Resorcin- und Phenol-Resorein-Formaldehyd-Harze (PRF-Harze), polymere Diphenylmethan-Dilsocinete (PMDI), Tannine, Lignine, Polyamine, Polyethylenimine (PEI) oder Mischungen daraus.

5. Verfahren nach einem der Ansprüche 1 bis 4, **dadurch gekennzeichnet, dass** das Verpressen des Holz-Leder-Bindemittel-Gemischs bei einer Temperatur zwischen 70° und 200°C, vorzugsweise zwischen 100°C und 175°C, besonders bevorzugt bei etwa 150°C durchgeführt wird.

6. Verfahren nach einem der Ansprüche 1 bis 5, **dadurch gekennzeichnet, dass** der Feuchtegehalt des Holzes und Leders vor dem Zerfasern auf unter 35%, vorzugsweise unter 15 %, besonders bevorzugt auf unter 12% gebracht wird.

7. Verfahren nach einem der Ansprüche 1 bis 6, **dadurch gekennzeichnet, dass** das Verpressen des Gemisches aus Holzfasern, Lederfasern und Bindemittel in einer Pressform erfolgt.

8. Verfahren nach einem der Ansprüche 1 bis 6, **dadurch gekennzeichnet, dass** das Verpressen des Gemisches aus Holzfasern, Lederfasern und Bindemittel in einem Durchlaufverfahren erfolgt.

9. Verfahren nach einem der Ansprüche 1 bis 8, **dadurch gekennzeichnet, dass** die Holzfasern vor dem Vermischen defibiriert werden.

10. Verfahren nach einem der Ansprüche 1 bis 9, **dadurch gekennzeichnet, dass** die Lederfasem vor dem Vermischen defibiert werden.

11. Verfahren nach einem der Ansprüche 1 bis 10, **dadurch gekennzeichnet, dass** das Leder von einer oder mehreren Rindenassen stammt.

12. Verbundkörper (1) bestehend aus einem Füllkörperanteil, Bindemittel (4) und gegebenenfalls Zusatzstoffen, wobei der Füllkörperanteil aus einem Gemisch von Holzfasern (2) und Lederfasern (3) besteht und wobei der Füllkörperanteil mit dem Bindemittel vermengt und mit diesem verpresst ist.

13. Verbundkörper nach Anspruch 12, **dadurch gekennzeichnet, dass** die Lederfasem (3) von im Wesentlichen, vorzugsweise ausschließlich, chromfrei gegerbten Leder stammen.

14. Verbundkörper nach Anspruch 12, **dadurch gekennzeichnet, dass** die Lederfasern (3) aus einer Mischung von chrom und chromfrei gegerbten Leder stammen.

15. Verbundkörper nach Anspruch 12, **dadurch gekennzeichnet, dass** die Lederfasem (3) von im Wesentlichen chrom gegerbten Leder stammen.

16. Verbundkörper nach einem der Ansprüche 12 bis 15, **dadurch gekennzeichnet, dass** der Gehalt an Lederfasern (3) im Verhältnis zum Gehalt an Holzfasern (2) wenigstens 50 Gew. %, vorzugsweise etwa 66 % beträgt.

## Claims

1. A process for the production of a composite body, preferably a composite plate, comprising wood, leather and binding agent, including the steps:
- fiberising the wood into wood fibres,
- fiberising the leather into leather fibres,
- mixing the leather and wood fibres,
- adding the binding agent,
- uniformly mixing the binding agent with the leather and wood fibres, and
- pressing the wood-leather-binding agent mixture to give the composite body.

2. A process according to claim 1 **characterised in that** the proportion of wood is between 10 and 90% and the proportion of leather is between 90 and 10%.

3. A process according to claim 1 or claim 2 **characterised in that** the binding agent has two components, wherein one component is an aldehyde and the second component is a phenol, a melamine, a resorcinol or urea.

4. A process according to one of claims 1 to 3 **characterised by** at least one binding agent selected from the group of urea-formaldehyde-glue resins (UF-resins), melamine-urea-formaldehyde glues (MUF-glues), phenol-formaldehyde-glues (PF-glues), resorcin and phenol-resorcin-formaldehyde resins (PRF-resins), polymeric diphenylmethane-diisocyanates (PMDI), tannins, lignins, polyamines, polyethyleneimines (PEI) or mixtures thereof.

5. A process according to one of claims 1 to 4 **characterised in that** the operation of pressing the wood-leather-binding agent mixture is performed at a temperature between 70° and 200°C, preferably between 100°C and 175°C, particularly preferably at about 150°C.

6. A process according to one of claims 1 to 8 **characterised in that** the moisture content of the wood and leather prior to the fiberising operation is set to below 35%, preferably below 15%, particularly preferably to below 12%.

7. A process according to one of claims 1 to 6 **characterised in that** the operation of pressing the mixture of wood fibres, leather fibres and binding agent is effected in a pressing mould.

8. A process according to one of claims 1 to 6 **characterised in that** the operation of pressing the mixture of wood fibres, leather fibres and binding agent is effected in a continuous process.

9. A process according to one of claims 1 to 8 **characterised in that** the wood fibres are defiberised prior to the mixing operation.

10. A process according to one of claims 1 to 9 **characterised in that** the leather fibres are defiberised prior to the mixing operation.

11. A process according to one of claims 1 to 10 **characterised in that** the leather originates from one or more breeds of cattle.

12. A composite body (1) comprising a filler body component, binding agent (4) and optionally additives, wherein the filler body component comprises a mixture of wood fibres (2) and leather fibres (3) and wherein the filler body component is mixed with the binding agent and pressed therewith.

13. A composite body according to claim 12 **characterised in that** the leather fibres (3) originate from leather which is tanned substantially and preferably exclusively in chromium-free fashion.

14. A composite body according to claim 12 **characterised in that** the leather fibres (3) originate from a mixture of chromium and chromium-free tanned leather.

15. A composite body according to claim 12 **characterised in that** the leather fibres (3) originate from substantially chromium-tanned leather.

16. A composite body according to one of claims 12 to 15 **characterised in that** the content of leather fibres (3) in relation to the content of wood fibres (2) is at least 50% by weight, preferably about 66% by weight.

## Revendications

1. Procédé de fabrication d'un corps composite, de préférence d'une plaque composite, en bois, cuir et liant, comprenant les étapes suivantes :
- défibrage du bois en fibres de bois,
- défibrage du cuir en fibres de cuir,
- opération de mélange des fibres de cuir et de bois,
- addition du liant,
- opération de mélange simultanée du liant avec les fibres de cuir et de bois
- et pressage du mélange bois-cuir-liant pour donner le corps composite.

2. Procédé selon la revendication 1, **caractérisé en ce que** la proportion de bois est comprise entre 10 et 90 %, et la proportion de cuir est comprise entre 90 et 10 %.

3. Procédé selon la revendication 1 ou 2, **caractérisé en ce que** le liant présente deux composants, un composant étant un aldéhyde et le deuxième composant un phénol, une mélamine, un résorcinol ou de l'urée.

4. Procédé selon l'une des revendications 1 à 3, **caractérisé par** au moins un liant choisi dans le groupe résines collantes urée-formaldéhyde (résines UF), colles mélamine-urée-formaldéhyde (colles MUF), colles phénol-formaldéhyde (colles PF), résines résorcine et phénol-résorcine-formaldéhyde (résines PRF), polymères diphénylméthane-diisocyanates (PMDI), tanins, lignines, polyamines, polyéthylènimine (PEI) ou de mélanges de ceux-ci.

5. Procédé selon l'une des revendications 1 à 4, **caractérisé en ce que** le pressage du mélange bois-cuir-liant est effectué à une température entre 70° et 200°C, de préférence entre 100°C et 175°C, de façon particulièrement préférée à environ 150°C.

6. Procédé selon l'une des revendications 1 à 5, **caractérisé en ce que** la teneur en humidité du bois et du cuir avant le défibrage est ramenée au-dessous de 35 %, de préférence au-dessous de 15 %, de façon particulièrement préférée au-dessous de 12%.

7. Procédé selon l'une des revendications 1 à 6, **caractérisé en ce que** le pressage du mélange de fibres de bois, de fibres de cuir et de liant s'effectue dans un moule de pressage.

8. Procédé selon l'une des revendications 1 à 6, **caractérisé en ce que** le pressage du mélange de fibres de bois, de fibres de cuir et de liant s'effectue dans un procédé continu.

9. Procédé selon l'une des revendications 1 à 8, **caractérisé en ce que** les fibres de bois sont défibrées avant l'opération de mélange.

10. Procédé selon l'une des revendications 1 à 9, **caractérisé en ce que** les fibres de cuir sont défibrées avant l'opération de mélange.

11. Procédé selon l'une des revendications 1 à 10, **caractérisé en ce que** le cuir provient d'une ou de plusieurs races bovines.

12. Corps composite (1), composé d'une fraction de charge, d'un liant (4) et éventuellement d'adjuvants, la fraction charge étant composée d'un mélange de fibres de bois (2) et de fibres de cuir (3), et la fraction de charge étant mélangée au liant et compressée avec celui-ci.

13. Corps composite selon la revendication 12, **caractérisé en ce que** les fibres de cuir (3) proviennent essentiellement, de préférence exclusivement, de cuir tanné sans chrome.

14. Corps composite selon la revendication 12, **caractérisé en ce que** les fibres de cuir (3) proviennent d'un mélange de cuir tanné avec du chrome et sans chrome.

15. Corps composite selon la revendication 12, **caractérisé en ce que** les fibres de cuir (3) proviennent de cuir essentiellement tanné avec du chrome.

16. Corps composite selon l'une des revendications 12 à 15, **caractérisé en ce que** la teneur en fibres de cuir (3) par rapport à la teneur en fibres de bois (2) est au moins égale à 50 %-poids, de préférence égale à environ 66 %.
